# EUROPEAN PATENT SPECIFICATION

(11) **EP 2 368 621 B1**
(45) Date of publication and mention of the grant of the patent: **10.07.2013**
(21) Application number: 11250318.0
(22) Date of filing: 16.03.2011
(51) Int. Cl.: B01D 46/24, B01D 53/94, B01J 35/04, F01N 3/022, F01N 3/28

(54) **Honeycomb structure**
Wabenstruktur
Structure en nid d'abeille

(30) Priority: 23.03.2010 JP 2010065724
(43) Date of publication of application: 28.09.2011
(73) Proprietor: NGK Insulators, Ltd., Nagoya-City, Aichi Pref. 467-8530 (JP)
(72) Inventor: Hirose, Shogo, Nagoya City Aichi-ken, 467-8530 (JP); Kodama, Eriko, Nagoya City Aichi-ken, 467-8530 (JP)
(74) Representative: Paget, Hugh Charles Edward

(56) References cited:
- EP-A1- 1 422 390
- JP-A- 2007 289 924

## Description

### BACKGROUND OF THE INVENTION

The present invention relates to a honeycomb structure. More specifically, the invention relates to a honeycomb structure that exhibits both excellent temperature rise properties and high heat capacity, and can efficiently purify exhaust gas discharged from a diesel engine or the like.

Due to tighter diesel emission regulations, a diesel particulate filter (DPF) has been used in various ways to trap particulate matter (PM) contained in exhaust gas discharged from a diesel engine. A DPF is normally coated with a PM oxidizing catalyst, and a honeycomb structure coated with a catalyst is installed on the upstream side of the DPF. The honeycomb structure converts NO contained in exhaust gas into NO₂, so that PM deposited on the DPF is easily burned, or a post-injection process is performed by controlling the engine, so that unburnt fuel is oxidized to increase the exhaust gas temperature, whereby PM deposited on the DPF is burned (i.e., the DPF is regenerated).

JP-A-2002-177794 discloses a ceramic support or a catalyst body for which the catalytic performance is improved by increasing the amount of catalyst (per unit volume) supported in the center area of a carrier where a large amount of gas flows. JP-A-2002-177794 also discloses increasing the cell density in the center area of the carrier, and decreasing the cell density in the outer circumferential area of the carrier.

In order to smoothly burn PM deposited on the DPF, it is necessary to increase the period of time in which the catalyst applied to the honeycomb structure reaches the activation temperature as much as possible. However, since the temperature of exhaust gas discharged from a diesel engine is low, the honeycomb structure may not reach the catalyst activation temperature in a low-load state. The temperature of the honeycomb structure may rapidly decrease to a temperature equal to or lower than the catalyst activation temperature when a rapid transition to a low-load state has occurred after a high-load operation. This may hinder PM burning, or active regeneration may not be completed.

In order to solve the above problems, the heat capacity of the honeycomb structure is normally decreased (e.g., the thickness of the partition wall of the honeycomb structure is decreased, or the porosity of the partition wall is increased) (i.e., the temperature rise properties of the substrate are improved) so that the catalyst activation temperature is quickly reached.

The temperature rise properties of the substrate are improved by decreasing the heat capacity of the substrate, so that the catalyst quickly reaches the activation temperature. However, the temperature of the substrate quickly becomes lower than the catalyst activation temperature when the exhaust gas temperature has decreased. If the heat capacity of the substrate is increased in order to prevent a decrease in temperature of the substrate when the exhaust gas temperature has decreased, the temperature rise properties deteriorate. Specifically, it is impossible to increase the period of time in which the catalyst applied to the honeycomb structure reaches the activation temperature by merely adjusting the heat capacity of the substrate by changing the thickness of the partition wall or the porosity of the substrate.

In order to solve the above problems, JP-A-2007-289924 discloses a honeycomb structure that includes two or more partition walls that differ in thickness. The honeycomb structure disclosed in JP-A-2007-289924 solves the above trade-off problem (i.e., it is difficult to achieve excellent temperature rise properties and high heat capacity at the same time), enables PM collected by a filter to be smoothly burned, and can efficiently purify exhaust gas when installed on the upstream side of a filter that collects PM discharged from a diesel engine.

JP-A-2008-200605 discloses a honeycomb structure for which the isostatic strength is improved without increasing the mass of the honeycomb structure. Since the mass of the honeycomb structure is not increased, the exhaust gas purification catalyst can be quickly heated and activated.

### SUMMARY OF THE INVENTION

However, the ceramic support or the catalyst body disclosed in JP-A-2002-177794 does not exhibit sufficient purification performance since the temperature rise properties and the heat retention properties are not taken into consideration. In the honeycomb structure disclosed in JP-A-2007-289924, a thick area of the partition wall exhibits increased heat retention properties due to high heat capacity, and a thin area of the partition wall exhibits increased temperature rise properties due to low heat capacity. However, the temperature rise properties and the heat retention properties are not necessarily sufficient. The honeycomb structure disclosed in JP-A-2008-200605 also does not necessarily exhibit sufficient temperature rise properties and heat retention properties. Therefore, an improved honeycomb structure has been desired.

The invention was conceived in view of the above situation. An object of the invention is to provide a honeycomb structure that exhibits excellent temperature rise properties and high heat capacity, and can efficiently purify exhaust gas discharged from a diesel engine or the like.

The inventors found that the above object can be achieved by alternately disposing at least two types of cell structures, and setting the ratio of the value "open frontal area × (hydraulic diameter)²" and the boundary-to-boundary distance of each cell structure (area) within given ranges. Specifically, the invention provides the following honeycomb structure.
[1] A honeycomb structure including at least two areas that differ in cell structure, the at least two areas including a first area having a first cell structure, and a second area having a second cell structure that has an open frontal area larger than that of the first cell structure, the first cell structure and the second cell structure being formed so that an open frontal area OFA₁ and a hydraulic diameter Hd₁ of the first area, and an open frontal area OFA₂ and a hydraulic diameter Hd₂ of the second area, satisfy the relationship "(OFA₁×Hd₁²)/(OFA₂×Hd₂²)=0.9 to 1.1", the first areas and the second areas being alternately disposed at least in one direction, and a minimum boundary-to-boundary distance of the first area and a minimum boundary-to-boundary distance of the second area in a cross section perpendicular to a cell extension direction being 5 to 40 mm.

[2] The honeycomb structure according to [1], wherein the first cell structure and the second cell structure are formed so that the open frontal area OFA₁ and the hydraulic diameter Hd₁ of the first area, and the open frontal area OFA₂ and the hydraulic diameter Hd₂ of the second area, satisfy the relationship "(OFA₁×Hd₁²)/(OFA₂×Hd₂²)=0.95 to 1.05", and the minimum boundary-to-boundary distance of the first area and the minimum boundary-to-boundary distance of the second area in the cross section perpendicular to the cell extension direction are 10 to 30 mm.

[3] The honeycomb structure according to [1] or [2], the honeycomb structure being formed of at least one ceramic selected from the group consisting of a cordierite-forming raw material, alumina, mullite, lithium aluminosilicate (LAS), aluminum titanate, zirconia, silicon carbide, silicon nitride, activated carbon, and zeolite.

[4] The honeycomb structure according to any one of [1] to [3], wherein the first areas and the second areas are formed in a checkered pattern, concentrically, or in a striped pattern in one direction in the cross section perpendicular to the cell extension direction.

Since the areas that differ in cell structures are alternately disposed, and the ratio of the value "open frontal area × (hydraulic diameter)²" is set to 0.9 to 1.1, an almost identical amount of gas flows through each area, so that the honeycomb structure quickly increases in temperature in one area, and slowly decreases in temperature in the other area. Specifically, a honeycomb structure that quickly increases in temperature, and slowly decreases in temperature can be obtained. Therefore, a catalyst supported on the honeycomb structure can be easily activated, so that the purification performance of the catalyst on exhaust gas can be improved.

### BRIEF DESCRIPTION OF THE DRAWINGS

FIG. 1 is a perspective view showing a honeycomb structure according to one embodiment of the invention.
FIG. 2 is a view illustrative of one end face of a honeycomb structure.
FIG. 3A is a partial schematic view showing a first area and a second area viewed from one end face of a honeycomb structure according to one embodiment of the invention, and FIG. 3B is a partial schematic view showing a first area and a second area viewed from one end face of a honeycomb structure according to another embodiment of the invention.
FIG. 4A is a view illustrative of a boundary-to-boundary distance of an area, and FIG. 4B is a view illustrative of a boundary-to-boundary distance of a rectangular area.
FIG. 5 is a schematic view showing an embodiment in which a high-porosity area and a low-porosity area are formed in a rectangular shape.
FIG. 6 shows an embodiment in which areas are diagonally shifted (stacked).
FIG. 7 shows an embodiment in which areas are formed concentrically in a circular shape.
FIG. 8 shows an embodiment in which areas are formed concentrically in a quadrilateral shape.
FIG. 9 shows an embodiment in which circular areas are scattered.
FIG. 10 shows an embodiment in which quadrilateral areas are scattered.
FIG. 11 shows an embodiment in which areas are alternately disposed in one direction.

### BEST MODE FOR CARRING OUT THE INVENTION

Exemplary embodiments of the invention are described below with reference to the drawings. Note that the invention is not limited to the following exemplary embodiments.

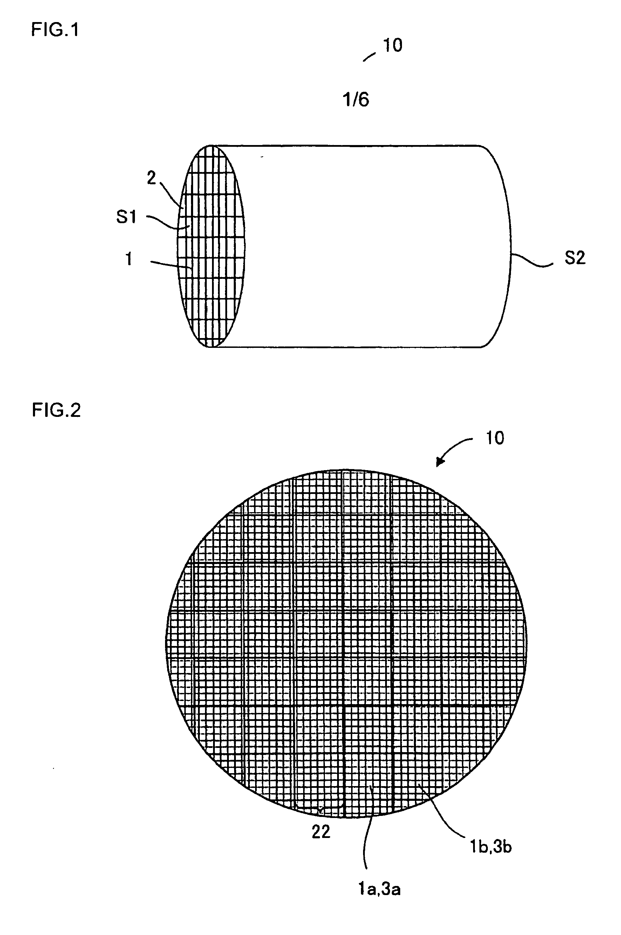

FIG. 1 is a perspective view showing a honeycomb structure according to one embodiment of the invention, and FIG. 2 is a view illustrative of one end face of the honeycomb structure shown in FIG. 1. As shown in FIG. 1, a honeycomb structure 10 according to this embodiment includes a plurality of cells 2 that are defined by a plurality of partition walls 1, and extend in parallel between two end faces Sl and S2. The honeycomb structure 10 includes at least two areas that differ in cell structure, the at least two areas including a first area having a first cell structure, and a second area having a second cell structure that has an open frontal area larger than that of the first cell structure, the first areas and the second areas being alternately disposed at least in one direction.

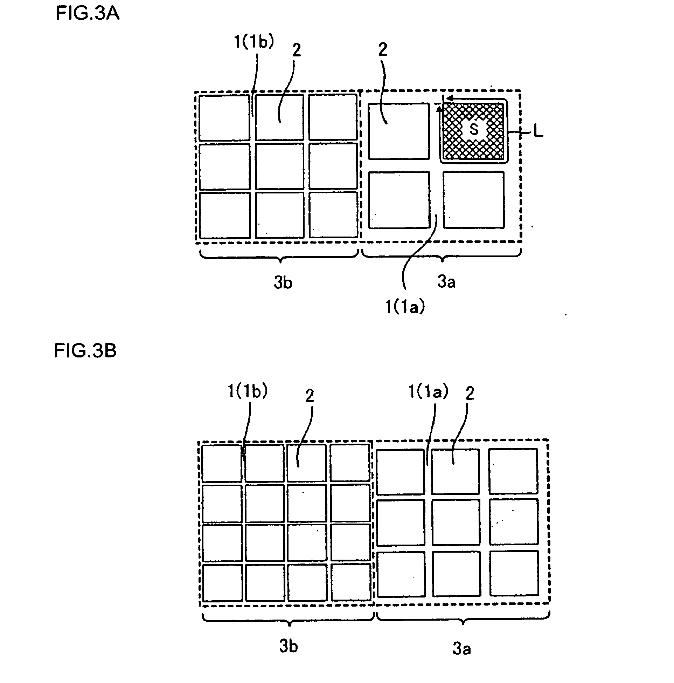

FIGS. 3A and 3B illustrate a first area 3a and a second area 3b in detail. FIG. 3A is a partial schematic view showing a first area 3a and a second area 3b viewed from one end face of the honeycomb structure 10. Four cells (2×2 cells) are formed in the first area 3a. Nine cells (3×3 cells) are formed in the second area 3b. As shown in FIG. 2, the first areas 3a and the second areas 3b are formed in a checkered pattern, for example. FIG. 3B shows an example in which nine cells (3×3 cells) are formed in the first area 3a, and sixteen cells (4×4 cells) are formed in the second area 3b.

When using the honeycomb structure 10 as an automotive exhaust gas purification apparatus, for example, the temperature of the honeycomb structure 10 quickly increases as the area of the second area 3b (i.e., an area having a large open frontal area) increases, and quickly decreases when the engine has been stopped. The temperature of the honeycomb structure 10 slowly increases as the area of the first area 3a (i.e., an area having a small open frontal area) increases, and slowly decreases when the engine has been stopped. Therefore, it is preferable that the first areas 3a and the second areas 3b be alternately disposed at least in one direction, and the first cell structure and the second cell structure be formed so that an open frontal area OFA₁ and a hydraulic diameter Hd₁ of the first area, and an open frontal area OFA₂ and a hydraulic diameter Hd₂ of the second area, satisfy the relationship (OFA₁×Hd₁²)/(OFA₂×Hd₂²)=0.9 to 1.1". It is preferable that a minimum boundary-to-boundary distance 22 of each area in the cross section perpendicular to the cell extension direction be 5 to 40 mm.

The term "hydraulic diameter Hd" refers to an equivalent hydraulic diameter (i.e., the diameter of a circular tube equivalent to the cross section of a flow passage). The equivalent hydraulic diameter is normally expressed by 4S/L (S: cross-sectional area of flow passage (cell), L: cross-sectional length (cross-sectional circumferential length of cell)) (see FIG. 3A). The hydraulic diameter is defined as the average value of the hydraulic diameters of three typical cells other than a partial cell and a variant cell. The open frontal area is defined by "(total cross-sectional area of cells included in area and open at end face of honeycomb structure) / (total cross-sectional area of area at end face of honeycomb structure)".

The relationship "(OFA₁×Hd₁²)/(OFA₂×Hd₂²)=0.9 to 1.1" means that the value "open frontal area × (hydraulic diameter)²" of the first cell structure is almost equal to that of the second cell structure. The pressure loss in a given area is proportional to the value "1/(open frontal area × (hydraulic diameter)²). Therefore, the relationship " (OFA₁×Hd₁²)/(OFA₂×Hd₂²) =0.9 to 1.1" means that the pressure loss in each area is almost equal. Specifically, the flow rate in each area is almost equal. If the flow rate and the hydraulic diameter are identical, the temperature of the honeycomb structure quickly increases as the open frontal area increases since the gas contact area is large and the mass is small. On the other hand, the temperature of the honeycomb structure slowly increases as the open frontal area decreases since the gas contact area is small and the mass is large. If the open frontal area is identical, the temperature of the honeycomb structure quickly increases as the hydraulic diameter increases since the gas contact area is large and the mass is small. Therefore, the balance between the value "open frontal area × (hydraulic diameter)²" of the first cell structure and that of the second cell structure is important. A honeycomb structure 10 that quickly increases in temperature, but slowly decreases in temperature can be obtained when the relationship "(OFA₁×Hd₁²)/(OFA₂×Hd₂²)=0.9 to 1.1" is satisfied.

It is more preferable that the first cell structure and the second cell structure be formed so that the open frontal area OFA₁ and the hydraulic diameter Hd₁ of the first area, and the open frontal area OFA₂ and the hydraulic diameter Hd₂ of the second area, satisfy the relationship "(OFA₁×Hd₁2)/(OFA₂×Hd₂²)=0.95 to 1.05", and the minimum boundary-to-boundary distance of the first area and the minimum boundary-to-boundary distance of the second area in the cross section perpendicular to the cell extension direction be 10 to 30 mm. A honeycomb structure 10 that more quickly increases in temperature, but more slowly decreases in temperature can be obtained by setting the ratio "OFA×Hd²)" and the minimum boundary-to-boundary distance within the above ranges.

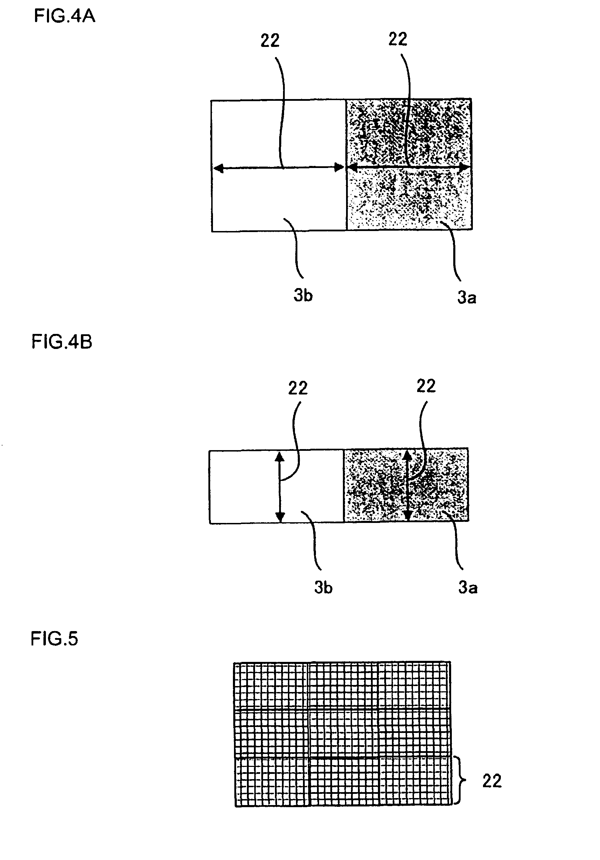

The boundary-to-boundary distance of each area is described below with reference to FIGS. 4A and 4B. The term "boundary-to-boundary distance" refers to the distance (minimum distance) between two opposite boundaries of each area. FIG. 4A shows an example in which square first areas 3a and square second areas 3b are alternately disposed. In this case, the distance indicated by a two-headed arrow in FIG. 4A is the minimum boundary-to-boundary distance 22. FIG. 4B shows an example in which rectangular first areas 3a and rectangular second areas 3b are alternately disposed. In this case, the shorter of the boundary-to-boundary distances (i.e., the boundary-to-boundary distance in the vertical direction) shown in FIG. 4B is the minimum boundary-to-boundary distance 22. A honeycomb structure 10 that quickly increases in temperature, but slowly decreases in temperature can be obtained by setting the minimum boundary-to-boundary distance 22 of the first area 3a and the minimum boundary-to-boundary distance 22 of the second area 3b to 5 to 40 mm.

The partition wall 1 of the honeycomb structure 10 according to this embodiment is preferably formed of a ceramic. The partition wall 1 is more preferably formed of at least one ceramic selected from the group consisting of a cordierite-forming raw material, alumina, mullite, lithium aluminosilicate (LAS), aluminum titanate, zirconia, silicon carbide, silicon nitride, activated carbon, and zeolite.

It is important to balance the temperature fall properties and the temperature rise properties of the honeycomb structure 10. It is preferable that the honeycomb structure 10 be formed so that the first area 3a (i.e., an area having a small open frontal area) is enclosed by the second areas 3b (i.e., an area having a large open frontal area), and the second area 3b is enclosed by the first areas 3a. As shown in FIG. 2, it is preferable that areas (first areas 3a) defined by a first partition wall 1a and areas (second areas 3b) defined by a second partition wall 1b be quadrilateral, and be alternately and regularly disposed (more preferably disposed in a checkered pattern). Each area may be square or rectangular (see FIG. 5). A heat exchange easily occurs between each area when each area is square. A heat exchange efficiently occurs between each area by regularly disposing the high-porosity areas and the low-porosity areas in this manner. Specifically, when the temperature of the high-porosity area has increased, heat is transferred to the low-porosity area from the high-porosity area, and the low-porosity area retains heat.

According to the above configuration, the heat capacity decreases in the second area 3b having a large open frontal area. Therefore, since the temperature quickly increases in the cells 2 in the second area 3b due to heat transfer, the temperature rise properties are improved. On the other hand, the heat capacity increases in the first area 3a having a small open frontal area. Therefore, since the temperature slowly decreases in the cells 2 in the first area 3a, the heat retention properties are improved. Accordingly, when installing the honeycomb structure 10 in a diesel engine car or the like, a catalyst can be quickly activated to purify gas even if the engine is frequently stopped, started, and operated.

According to the above configuration, the partition wall 1b of the area having a large open frontal area is initially heated during heating, so that a catalyst applied to the honeycomb structure 10 quickly reaches the activation temperature. On the other hand, the partition wall 1a of the area having a small open frontal area is slowly cooled when the exhaust gas temperature decreases, so that the period of time in which the catalyst reaches the activation temperature increases.

When the first area 3a and the second area 3b are square and disposed in a checkered pattern, the minimum boundary-to-boundary distance 22 of the first area 3a and the second area 3b in the cross section perpendicular to the cell extension direction is preferably 5 to 40 mm, and more preferably 10 to 30 mm. If the minimum boundary-to-boundary distance 22 of each area in the cross section perpendicular to the cell extension direction is within the above range, a difference in heat capacity can be achieved.

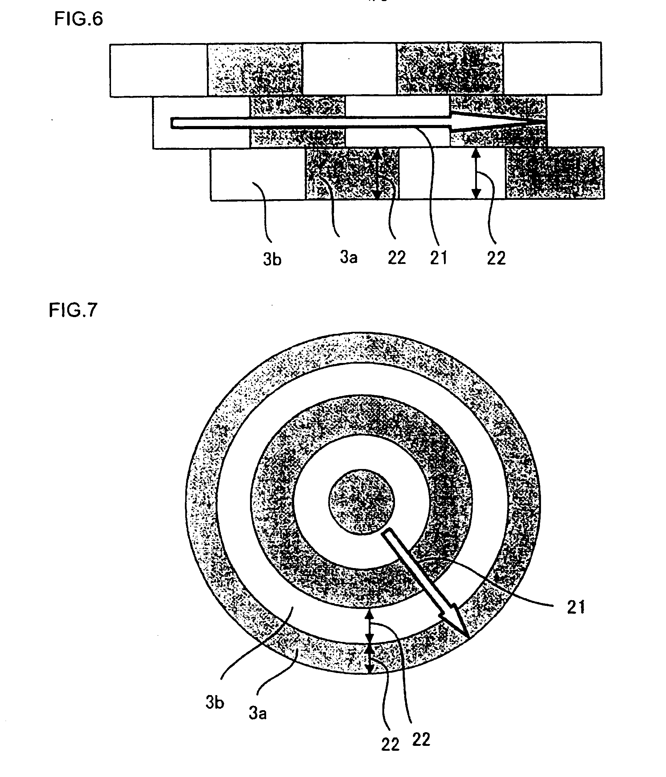

FIGS. 6 to 11 illustrate other embodiments of the pattern of the first area 3a and the second area 3b. Note that FIGS. 6 to 11 do not illustrate the shape of the cells 2 of the honeycomb structure 10. A plurality of cells 2 are formed in each area (see FIG. 2).

FIG. 6 shows an embodiment of the honeycomb structure 10 in which the areas are disposed in diagonally shifted and stacked state. In the embodiment shown in FIG. 6, the first areas 3a and the second areas 3b are alternately disposed at least in one direction (horizontal direction in FIG. 6), and are diagonally shifted within an arrangement (repeat) direction 21. In FIG. 6, each area is rectangular, and the length of the short side of each area is the minimum boundary-to-boundary distance 22.

FIG. 7 shows an embodiment of the honeycomb structure 10 in which the areas are formed concentrically in a circular shape. In FIG. 7, the first areas 3a and the second areas 3b are alternately disposed in the diametrical direction. The diametrical direction corresponds to the arrangement direction 21, and the boundary-to-boundary distance in the diametrical direction is the minimum boundary-to-boundary distance 22.

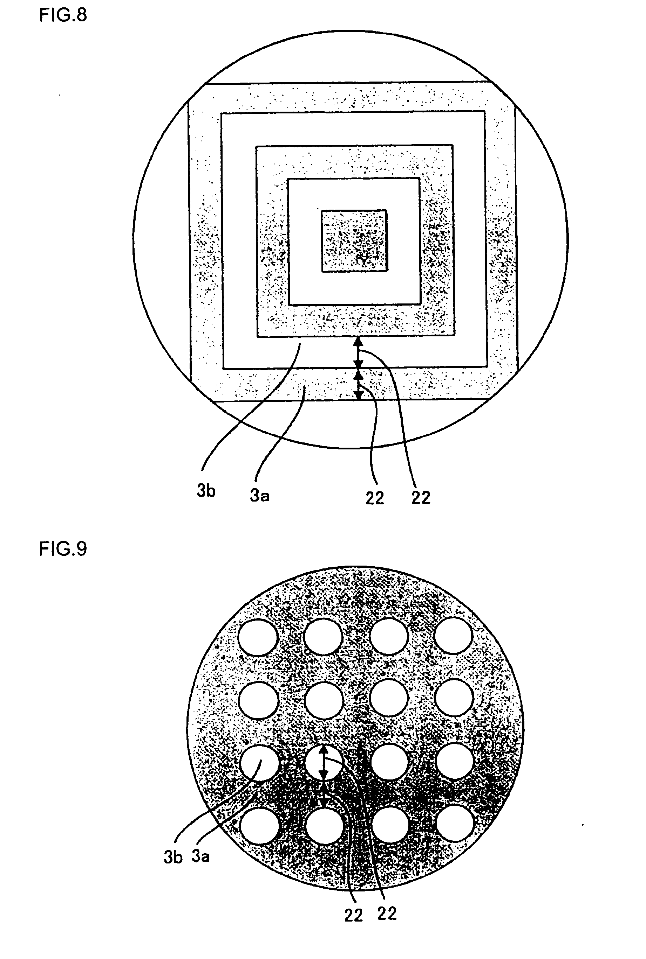

FIG. 8 shows an embodiment of the honeycomb structure 10 in which the areas are formed concentrically in a quadrilateral shape. The distance between two opposite boundaries is the minimum boundary-to-boundary distance 22.

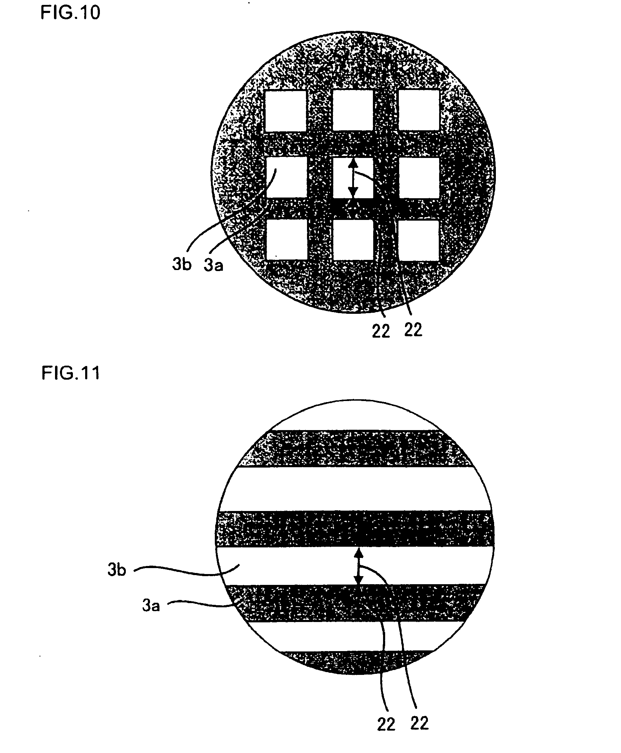

FIG. 9 shows an embodiment of the honeycomb structure 10 in which circular areas are scattered, and FIG. 10 shows an embodiment of the honeycomb structure 10 in which quadrilateral areas are scattered. The first areas 3a and the second areas 3b are also alternately disposed in the embodiments shown in FIGS. 9 and 10.

FIG. 11 shows an embodiment of the honeycomb structure 10 having a striped pattern in which the areas are alternately disposed in one direction. The vertical direction in FIG. 11 is the arrangement direction 21. The honeycomb structure 10 shown in FIG. 11 can be easily produced since the areas are alternately disposed only in one direction.

A method of producing the honeycomb structure according to one embodiment of the invention is described below. When producing the honeycomb structure 10 formed of cordierite, for example, talc, kaolin, alumina, silica, and the like are mixed in a given mixing ratio so that cordierite is produced upon firing. After the addition of a binder, a surfactant, and water, the components are mixed to obtain kneaded clay. The porosity and the thermal expansibility are affected by the grain size, the components, and the like of the cordierite-forming raw material. A person having ordinary skill in the art would appropriately select the grain size, the components, and the like of the cordierite-forming raw material. The binder and the surfactant may be appropriately selected. The resulting kneaded clay is extruded using an extruder to obtain a honeycomb structure. The kneaded clay is extruded using a die that produces the desired cell structure. The extruded honeycomb structure is fired at 1350 to 1450°C in air.

Note that a honeycomb structure in which the areas are formed in a checkered pattern (FIG. 2) and a honeycomb structure in which the areas are alternately disposed in one direction (FIG. 11) can be easily produced. The production cost can be reduced when producing such a honeycomb structure.

The honeycomb structure 10 according to one embodiment of the invention may be coated with a catalyst to produce a honeycomb catalyst body. Examples of the catalyst include an oxidizing catalyst, a NOx occlusion/reduction catalyst, an SCR catalyst, a three-way catalyst, and the like.

For example, a three-way catalyst (i.e., a gamma-alumina-containing catalyst that supports platinum (Pt) and rhodium (Rh) in a ratio (Pt:Rh) of 5:1 to 3:1) may be supported on the honeycomb structure in an amount of 160 to 290 g/1000 cm³ to produce a honeycomb catalyst body. Cerium oxide (CeO₂) and zirconium oxide (ZrO₂) may be used as a promoter for the catalyst supported on the honeycomb structure. When platinum metals are supported in an amount of 1 to 10 g/1000 cm³, the catalyst coating amount is preferably 50 to 300 g/1000 cm ³ If the catalyst coating amount is less than 50 g/1000 cm³ the heat retention properties and the temperature rise properties may not be sufficiently improved. If the catalyst coating amount exceeds 300 g/1000 cm³, clogging may occur due to the catalyst.

According to the above configuration of the honeycomb structure 10 (honeycomb catalyst body), since the second area exhibits excellent temperature rise properties, the catalyst quickly reaches the activation temperature when the engine has been started. Since the first area exhibits excellent heat retention properties, the catalyst activation temperature can be maintained even if the car in which the honeycomb structure 10 is installed is frequently stopped during travel in a city area. Since the second area very quickly reaches the catalyst activation temperature during travel after idling, and the first area is maintained at a relatively high temperature during idling, the entire honeycomb structure can very quickly exhibit its functions as compared with a normal honeycomb structure.

The above described honeycomb structure 10 may be used as a purification apparatus that is installed on the upstream side of a filter. Specifically, the honeycomb structure 10 may be used as a diesel oxidation catalyst (DOC) that is installed on the upstream side of a filter of a diesel purification apparatus. Since the exhaust gas temperature of a diesel engine car is low, the catalyst provided in the DOC may not effectively function. It is important to implement a quick increase in temperature rise and a slow decrease in temperature in order to prevent such a situation. Since the honeycomb structure 10 according to one embodiment of the invention quickly increases in temperature and retains heat, the honeycomb structure 10 can be used for such an application. Since it is possible to implement a quick increase in temperature rise and a slow decrease in temperature when using a three-way catalyst used for gasoline engine cars, exhaust gas discharged from a gasoline engine car can be further purified by utilizing the honeycomb structure 10 as a purification apparatus for a gasoline engine car.

### EXAMPLES

The invention is further described below by way of examples. Note that the invention is not limited to the following examples.

### Examples 1 to 19 and Comparative Examples 1 to 5

Talc, kaolin, alumina, silica, and the like were mixed in a given mixing ratio so that cordierite was produced upon firing. After the addition of a binder, a surfactant, and water, the components were mixed to obtain kneaded clay. The resulting kneaded clay was extruded using an extruder provided with a die having an adjusted slit width so that a cell structure shown in Tables 1 and 2 was obtained upon firing, taking account of shrinkage during drying and firing. The extruded product was dried, and fired to obtain a honeycomb structure (diameter: 100 mm, length: 120 mm) having an approximately square cell shape (see FIG. 1). A three-way catalyst was supported on the honeycomb structure. The honeycomb structure of Comparative Example 1 had a cell structure in which the entire area had an identical porosity (partition wall thickness (rib thickness): 140 µm, cell density: 54 cells/cm²).

### Evaluation of purification performance

The honeycomb structure was installed (canned) in an exhaust pipe of a gasoline engine car (displacement: 2.0 L). Exhaust gas was sampled from a pipe connected to the exhaust pipe during an operation in the JC08 mode. Specifically, exhaust gas was collected in a bag, and the HC emissions (unburnt hydrocarbons (HC) in exhaust gas) were measured by analyzing the collected exhaust gas using an analyzer after completion of the operation (in accordance with the JC08 regulations). The HC purification performance based on that of Comparative Example 1 is shown in Tables 1 and 2.

The measured values and the evaluation results of each sample are shown in Tables 1 and 2. The sample shown in Tables 1 and 2 is a honeycomb structure in which areas are formed in a checkered pattern (see FIG. 2). A value of ratio larger than 1 indicates that the HC purification performance was better than that of Comparative Example 1.

**TABLE 1**

| | | Comp. Ex. 1 | Comp. Ex. 2 | Comp. Ex. 3 | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|---|---|---|
| Rib thickness of area having small open frontal area | µm | 140 | 64 | 64 | 64 | 64 | 64 | 64 | 89 | 89 | 89 | 89 | 89 | 89 | 89 |
| Cell density of area having small open frontal area | cells /cm² | 54 | 93 | 93 | 93 | 93 | 93 | 93 | 93 | 93 | 93 | 93 | 93 | 93 | 93 |
| Rib thickness of area having large open frontal area | µm | 140 | 165 | 165 | 165 | 165 | 165 | 165 | 109 | 109 | 109 | 203 | 203 | 203 | 203 |
| Cell density of area having large open frontal area | cells /cm² | 54 | 62 | 62 | 62 | 62 | 62 | 62 | 93 | 93 | 93 | 62 | 62 | 62 | 62 |
| Open frontal area OFA1 of area having small open frontal area | - | 0.80 | 0.88 | 0.88 | 0.88 | 0.88 | 0.88 | 0.88 | 0.84 | 0.84 | 0.84 | 0.84 | 0.84 | 0.84 | 0.84 |
| Open frontal area OFA2 of area having large open frontal area | - | 0.80 | 0.76 | 0.76 | 0.76 | 0.76 | 0.76 | 0.76 | 0.80 | 0.80 | 0.80 | 0.71 | 0.71 | 0.71 | 0.71 |
| Hydraulic diameter Hd1 of area having small open frontal area | mm | 1.22 | 0.97 | 0.97 | 0.97 | 0.97 | 0.97 | 0.97 | 0.95 | 0.95 | 0.95 | 0.95 | 0.95 | 0.95 | 0.95 |
| Hydraulic diameter Hd2 of area having large open frontal area | mm | 1.22 | 1.10 | 1.10 | 1.10 | 1.10 | 1.10 | 1.10 | 0.93 | 0.93 | 0.93 | 1.07 | 1.07 | 1.07 | 1.07 |
| Diameter | mm | 106 | 106 | 106 | 106 | 106 | 106 | 106 | 106 | 106 | 106 | 106 | 106 | 106 | 106 |
| Minimum boundary-to-boundary distance of area having small open frontal area and area having large open frontal area | (mm) | - | 4 | 42 | 6 | 12.7 | 20 | 26 | 6 | 12.7 | 26 | 6 | 12.7 | 26 | 32 |
| (OFA₁×Hd₁²) / (OFA₂×Hd₂²) | (-) | 1.00 | 0.90 | 0.90 | 0.90 | 0.90 | 0.90 | 0.90 | 1.09 | 1.09 | 1.09 | 0.94 | 0.94 | 0.94 | 0.94 |
| HC purification performance (Comparative Example 1=1.00) | (-) | 1.00 | 0.99 | 0.98 | 1.12 | 1.15 | 1.19 | 1.19 | 1.09 | 1.16 | 1.18 | 1.09 | 1.17 | 1.2 | 1.09 |

**TABLE 2**

| | | Comp. Ex. 4 | Comp. Ex. 5 | Comp. Ex. 6 | Comp. Ex. 7 | Comp. Ex.8 | Example 12 | Example 13 | Example 14 | Example 15 | Example 16 | Example 17 | Example 18 | Example 19 |
|---|---|---|---|---|---|---|---|---|---|---|---|---|---|---|
| Rib thickness of area having small open frontal area | µm | 89 | 89 | 89 | 165 | 64 | 64 | 89 | 89 | 64 | 64 | 64 | 64 | 64 |
| Cell density of area having small open frontal area | cells /cm² | 93 | 93 | 93 | 47 | 140 | 140 | 140 | 62 | 62 | 93 | 93 | 93 | 93 |
| Rib thickness of area having large open frontal area | µm | 140 | 140 | 140 | 203 | 140 | 165 | 203 | 216 | 165 | 165 | 165 | 165 | 165 |
| Cell density of area having large open frontal area | cells /cm² | 93 | 93 | 93 | 47 | 93 | 93 | 93 | 47 | 47 | 62 | 62 | 62 | 62 |
| Open frontal area OFA1 of area having small open frontal area | - | 0.84 | 0.84 | 0.84 | 0.79 | 0.86 | 0.86 | 0.80 | 0.86 | 0.90 | 0.88 | 0.88 | 0.88 | 0.88 |
| Open frontal area OFA2 of area having large open frontal area | - | 0.75 | 0.75 | 0.75 | 0.74 | 0.75 | 0.71 | 0.65 | 0.73 | 0.79 | 0.76 | 0.76 | 0.76 | 0.76 |
| Hydraulic diameter Hd1 of area having small open frontal area | mm | 0.95 | 0.95 | 0.95 | 1.30 | 0.78 | 0.78 | 0.76 | 1.18 | 1.21 | 0.97 | 0.97 | 0.97 | 0.97 |
| Hydraulic diameter Hd2 of area having large open frontal area | mm | 0.90 | 0.90 | 0.90 | 1.26 | 0.90 | 0.87 | 0.83 | 1.25 | 1.30 | 1.10 | 1.10 | 1.10 | 1.10 |
| Diameter | mm | 106 | 106 | 106 | 106 | 106 | 106 | 106 | 106 | 106 | 144 | 267 | 305 | 106 |
| Minimum boundary-to-boundary distance of area having small open frontal area and area having large open frontal area | (mm) | 12.7 | 6 | 26 | 12.7 | 12.7 | 12.7 | 12.7 | 12.7 | 12.7 | 12.7 | 12.7 | 12.7 | 12.7 |
| (OFA₁×Hd₁²) / (OFA₂×Hd₂²) | (-) | 1.25 | 1.25 | 1.25 | 1.13 | 0.87 | 0.98 | 1.02 | 1.06 | 0.99 | 0.90 | 0.90 | 0.90 | 0.90 |
| HC purification performance (Comparative Example 1=1.00) | (-) | 0.89 | 0.82 | 0.75 | 0.9 | 0.87 | 1.31 | 1.33 | 1.14 | 1.33 | 1.18 | 1.15 | 1.14 | 1.15 |

As is clear from the results for Examples 1 to 19, the HC purification performance was better than that of Comparative Example 1 when the minimum boundary-to-boundary distance of each area was 5 to 40 mm, and the relationship "(OFA₁×Hd₁²)/(OFA₂×Hd₂²)=0.9 to 1.1" was satisfied. In particular, excellent purification performance was obtained in Examples 12, 13, and 16 in which the minimum boundary-to-boundary distance of each area was 10 to 30 mm, and the relationship "(OFA₁×Hd₁²) / (OFA₂×Hd₂²)=0.95 to 1.05" was satisfied.

The HC purification performance obtained in Comparative Example 2 was inferior to that of Comparative Example 1 since the minimum boundary-to-boundary distance was short. The HC purification performance obtained in Comparative Example 3 was also inferior to that of Comparative Example 1 since the minimum boundary-to-boundary distance was long.

The honeycomb structure according to the invention is particularly effective for purifying diesel engine exhaust gas having a relatively low temperature, and may be effectively used as a honeycomb catalyst body installed on the upstream side of a DPF, a substrate for a selective catalytic reduction (SCR) catalyst for purifying NOx contained in exhaust gas, and a diesel oxidation catalyst. The honeycomb catalyst body may also effectively be used for a gasoline engine that discharges exhaust gas having a relatively high temperature.

## Claims

1. A honeycomb structure comprising at least two areas that differ in cell structure, the at least two areas including a first area having a first cell structure, and a second area having a second cell structure that has an open frontal area larger than that of the first cell structure, the first cell structure and the second cell structure being formed so that an open frontal area OFA₁ and a hydraulic diameter Hd₁ of the first area, and an open frontal area OFA₂ and a hydraulic diameter Hd₂ of the second area, satisfy the relationship "(OFA₁×Hd₁²) / (OFA₂×Hd₂²)=0.9 to 1.1", the first areas and the second areas being alternately disposed at least in one direction, and a minimum boundary-to-boundary distance of the first area and a minimum boundary-to-boundary distance of the second area in a cross section perpendicular to a cell extension direction being 5 to 40 mm.

2. The honeycomb structure according to claim 1, wherein the first cell structure and the second cell structure are formed so that the open frontal area OFA₁ and the hydraulic diameter Hd₁ of the first area, and the open frontal area OFA₂ and the hydraulic diameter Hd₂ of the second area, satisfy the relationship " (OFA₁×Hd₁²) / (OFA₂×Hd₂²) =0.95 to 1.05", and the minimum boundary-to-boundary distance of the first area and the minimum boundary-to-boundary distance of the second area in the cross section perpendicular to the cell extension direction are 10 to 30 mm.

3. The honeycomb structure according to claim 1 or 2, the honeycomb structure being formed of at least one ceramic selected from the group consisting of a cordierite-forming raw material, alumina, mullite, lithium aluminosilicate (LAS), aluminum titanate, zirconia, silicon carbide, silicon nitride, activated carbon, and zeolite.

4. The honeycomb structure according to any one of claims 1 to 3, wherein the first areas and the second areas are formed in a checkered pattern, concentrically, or in a striped pattern in one direction in the cross section perpendicular to the cell extension direction.

## Patentansprüche

1. Wabenstruktur, die zumindest zwei Bereiche mit unterschiedlicher Zellstruktur umfasst, wobei die zumindest zwei Bereiche einen ersten Bereich mit einer ersten Zellstruktur und einen zweiten Bereich mit einer zweiten Zellstruktur umfassen, der einen offenen Stirnbereich aufweist, der größer ist als jener der ersten Zellstruktur, wobei die erste Zellstruktur und die zweite Zellstruktur so ausgebildet sind, dass der offene Stirnbereich OFA₁ und der hydraulische Durchmesser Hd₁ des ersten Bereichs und der offene Stirnbereich OFA₂ und der hydraulische Durchmesser Hd₂ des zweiten Bereichs in folgender Beziehung stehen: "(OFA₁xHd₁²)/(OFA₂xHd₂²) = 0,9 bis 1,1 ", wobei die ersten Bereiche und die zweiten Bereiche abwechselnd zumindest in einer Richtung angeordnet sind und ein Mindestabstand zwischen den Rändern des ersten Bereichs und ein Mindestabstand zwischen den Rändern des zweiten Bereichs in einem Querschnitt im rechten Winkel auf die Zellausdehnungsrichtung 5 bis 40 mm betragen.

2. Wabenstruktur nach Anspruch 1, worin die erste Zellstruktur und die zweite Zellstruktur so ausgebildet sind, dass der offene Stirnbereich OFA₁ und der hydraulische Durchmesser Hd₁ des ersten Bereichs und der offene Stirnbereich OFA₂ und der hydraulische Durchmesser Hd₂ des zweiten Bereichs in folgender Beziehung stehen: "(OFA₁xHd₁²)/(OFA₂xHd₂²) = 0,95 bis 1,05" und ein Mindestabstand zwischen den Rändern des ersten Bereichs und ein Mindestabstand zwischen den Rändern des zweiten Bereichs in einem Querschnitt im rechten Winkel auf die Zellausdehnungsrichtung 10 bis 30 mm betragen.

3. Wabenstruktur nach Anspruch 1 oder 2, wobei die Wabenstruktur aus zumindest einem Keramikmaterial besteht, das aus der aus Cordierit bildendem Rohmaterial, Aluminiumoxid, Mullit, Lithiumaluminosilicat (LAS), Aluminiumtitanat, Zirkoniumdioxid, Siliciumcarbid, Siliciumnitrid, aktiviertem Kohlenstoff und Zeolith bestehenden Gruppe ausgewählt ist.

4. Wabenstruktur nach einem der Ansprüche 1 bis 3, worin die ersten Bereiche und zweiten Bereiche in einem Schachbrettmuster, konzentrisch oder in einem Streifenmuster in eine Richtung des Querschnitts, der im rechten Winkel auf die Zellausdehnungsrichtung steht, ausgebildet sind.

## Revendications

1. Structure en nid d'abeille comprenant au moins deux zones qui ont des structures cellulaires différentes, les au moins deux zones incluant une première zone ayant une première structure cellulaire, et une seconde zone ayant une seconde structure cellulaire qui a une zone ouverte frontale plus grande que celle de la première structure cellulaire, la première structure cellulaire et la seconde structure cellulaire étant formées de sorte qu'une zone ouverte frontale OFA₁ et un diamètre hydraulique Hd₁ de la première zone, et une zone ouverte frontale OFA₂ et un diamètre hydraulique Hd₂ de la seconde zone, satisfont la relation « (OFA₁ x Hd₁²) / (OFA₂ x Hd₂²) = 0,9 à 1,1 », les premières zones et les secondes zones étant disposées alternativement au moins dans une direction, et une distance minimale de limite à limite de la première zone et une distance minimale de limite à limite de la seconde zone dans une section transversale perpendiculaire à la direction d'extension cellulaire étant de 5 à 40 mm.

2. Structure en nid d'abeille selon la revendication 1, dans laquelle la première structure cellulaire et la seconde structure cellulaire sont formées de sorte que la zone ouverte frontale OFA₁ et le diamètre hydraulique Hd₁ de la première zone, et la zone ouverte frontale OFA₂ et le diamètre hydraulique Hd₂ de la seconde zone, satisfont la relation « (OFA₁ x Hd₁²) / (OFA₂ x Hd₂²) = 0,95 à 1,05 », et la distance minimale de limite à limite de la première zone et la distance minimale de limite à limite de la seconde zone dans une section transversale perpendiculaire à la direction d'extension cellulaire sont de 10 à 30 mm.

3. Structure en nid d'abeille selon la revendication 1 ou 2, la structure en nid d'abeille se composant d'au moins une céramique choisie dans le groupe constitué par une matière première formant une cordiérite, une alumine, une mullite, un aluminosilicate de lithium (LAS), un titanate d'aluminium, une zircone, un carbure de silicium, un nitrure de silicium, du charbon actif et une zéolite.

4. Structure en nid d'abeille selon l'une quelconque des revendications 1 à 3, dans laquelle les premières zones et les secondes zones sont formées selon un motif à damiers, de manière concentrique, ou selon un motif à rayures dans une direction dans la section transversale perpendiculaire à la direction d'extension cellulaire.
